# EUROPEAN PATENT APPLICATION

(11) **EP 4 418 413 A1**
(43) Date of publication of application: **21.08.2024**
(21) Application number: 24153720.8
(22) Date of filing: 24.01.2024
(51) Int. Cl.: H01M 50/103, H01M 50/184, H01M 50/538, H01M 50/553

(54) **ELECTRIC STORAGE DEVICE**

(30) Priority: 15.02.2023 JP 2023021856
(71) Applicant: Prime Planet Energy & Solutions, Inc., Chuo-ku Tokyo 103-0022 (JP)
(72) Inventor: UCHIDA, Yozo, Tokyo, 103-0022 (JP)
(74) Representative: Kuhnen & Wacker Patent- und Rechtsanwaltsbüro PartG mbB

(57) **Abstract**

An electric storage device is provided in which an enhancement of a space efficiency and an increase suppression of an electric resistance are compatibly implemented. The electric storage device of the present disclosure includes a case including an exterior package having a first surface formed in a wide width rectangular shape, having a pair of opposed second surfaces, having a pair of opposed third surfaces, and having an opening, and including a sealing plate configured to seal the opening and formed in a wide width rectangular shape. A positive electrode and a negative electrode include plural tabs protruding at one of end parts in a winding axis direction of the electrode body, and include a penetration hole at one surface of the second surface, a terminal is inserted into a penetration hole, wide width surfaces of the electrode body respectively face to the sealing plate and to the first surface, the tab is arranged inside the case to face to the second surface, and a metal
joint configured to connect the terminal and the tab is provided.

## Description

### BACKGROUND

The present disclosure relates to an electric storage device.

Conventionally, the electric storage device is known that includes an electrode body having a pair of opposed wide width surfaces, includes a case configured to accommodate the electrode body, and includes a terminal electrically connected to the electrode body. For example, Japanese Patent Publication 2022-44958 discloses a battery (an electric storage device) including an electrode body, a battery case (a case), and an electrical collector terminal, which is a technique having an object to implement a space efficiency in the case and to suppress a breakage on an electrode electrical collector body (tab) portion.

### SUMMARY

Based on an intensive study of the inventor, there is a room for improvement in the above described conventional technique. As described in detail, the above described electric storage device includes the electrical collector terminal (below, referred to as "electrical collector body", too), and thus a number of parts is increased so as to cause an increase in an electric resistance.

A herein present disclosure has been made in view of the above-described circumstances, and the object is to provide an electric storage device that can compatibly implement enhancing the space efficiency and suppressing the increase in the electric resistance.

### [Solution to Problem]

A herein disclosed electric storage device includes an electrode body in which a long sheet-shaped positive electrode and a long sheet-shaped negative electrode are wound in a sheet longitudinal direction via a separator and which has a pair of opposed wide width surfaces, includes a case which is formed in a hexahedron shape, which is configured to accommodate the electrode body, and which has an exterior package having a first surface formed in a wide width rectangular shape, an opening opposed to the first surface, a pair of opposed second surfaces extending from an outer edge of the first surface to the opening, a pair of opposed third surfaces extending from the outer edge of the first surface to the opening, and has a sealing plate configured to seal the opening, opposed to the first surface, and formed in a wide width rectangular shape, and includes terminals electrically connected to the electrode body. Here, each of the positive electrode and the negative electrode includes plural tabs protruding at one of end parts in a winding axis direction of the electrode body, penetration holes are provided on one of the second surfaces, the terminals are inserted into the penetration holes, the electrode body is arranged inside the case, wherein the wide width surfaces respectively face the sealing plate and the first surface, and to make the tabs face the second surfaces to which the terminals are attached, and a metal joint is provided to connect the terminals and the tabs.

According to the configuration described above, the tab of the electrode body and the terminal are directly and electrically connected by the metal joint without an electrical collector body, and thus it is possible to suppress the increase in the electric resistance. Further, by using the case configured as described above, it is possible to easily accommodate the electrode body in the case. By doing this, it is possible to further increase a volume of the electrode body. By increasing the volume of the electrode body, a movable range of the electrode body in the case is reduced. By doing this, it is possible to suitably reduce the breakage risk on the tab. Accordingly, it is possible to compatibly implement the capacity enhancement of the electric storage device (high volume energy density) and the conduction reliability.

### BRIEF DESCRIPTION OF THE DRAWINGS

FIG. 1 is a perspective view that schematically shows an electric storage device in accordance with one embodiment.
FIG. 2 is a longitudinal cross section view that is schematically shown along a II-II line of FIG. 1.
FIG. 3 is a longitudinal cross section view that is schematically shown along a III-III line of FIG. 1.
FIG. 4 is a schematic view of an electrode body in accordance with one embodiment.
FIG. 5 is a schematic view that is to explain an electrode body accommodating step and a tab joining step in accordance with one embodiment.
FIG. 6 is a schematic view that is to explain a sealing-plate sealing step in accordance with one practical example.

### DETAILED DESCRIPTION

Below, while referring to figures, an embodiment in accordance with a herein present disclosure will be explained. Incidentally, a matter not described in the present specification but required for performing the herein present disclosure can be grasped as design matters of those skilled in the art based on the related art in the present field. The herein present disclosure can be executed based on the contents disclosed in the present specification, and the technical common sense in the present field. Additionally, in the following accompanying figures, the same numerals and signs are given to the members/parts providing the same effect. Additionally, in each figure, the dimensional relation (a length, a width, a thickness, or the like) may not reflect the actual dimensional relation. Incidentally, a numerical value range expressed as "A to B" in the present specification semantically includes A and B, and semantically covers meanings of "preferably more than A" and "preferably less than B".

A term "electric storage device" in the present specification means a device that can perform charging and discharging. The electric storage device semantically covers a battery referred to generally as a lithium ion battery, a lithium secondary battery, or the like, and further covers a lithium polymer battery, a lithium ion capacitor, and the like. The secondary battery means a battery in general that is capable of repeatedly charging and discharging according to a movement of a charge carrier between a positive electrode and a negative electrode. Here, as one form of the electric storage device, a lithium ion secondary battery is illustrated.

### <Electric storage device 1>

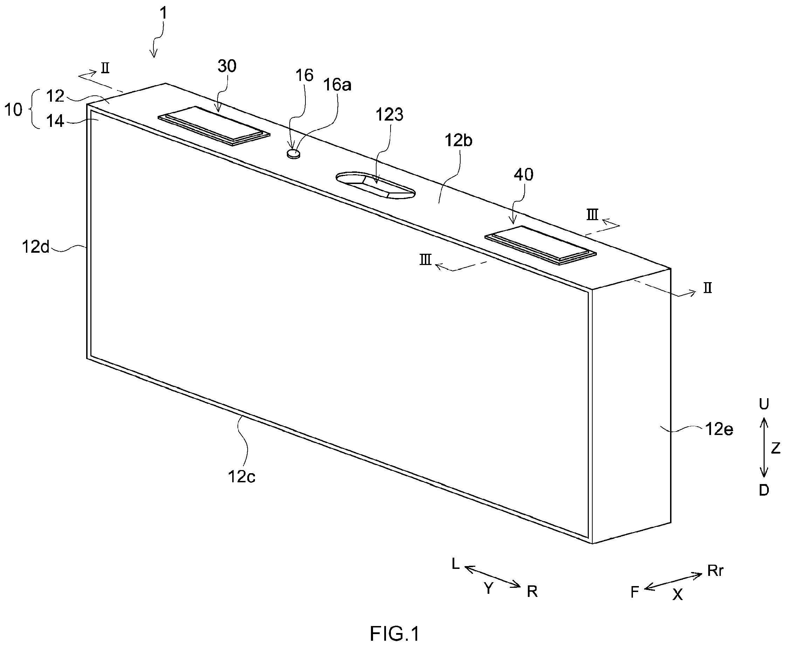

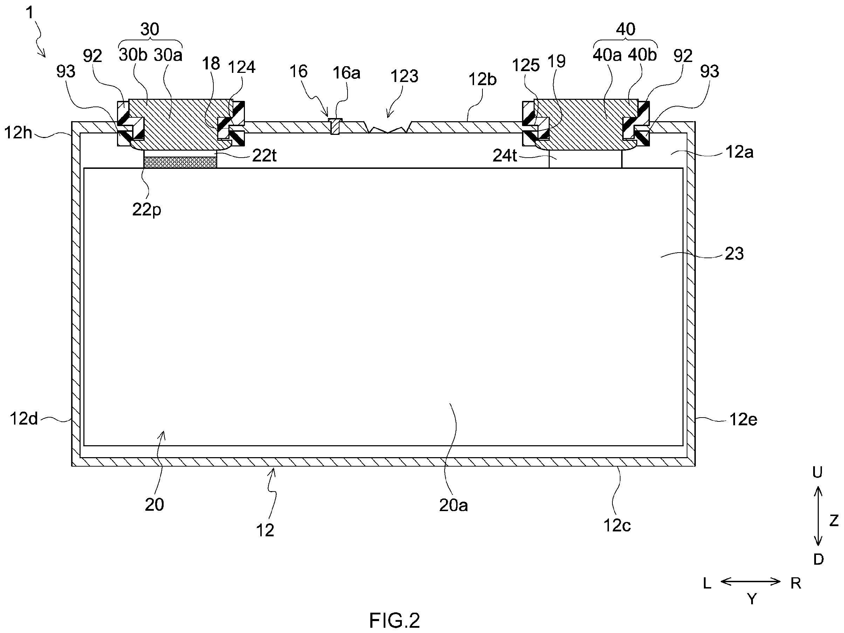

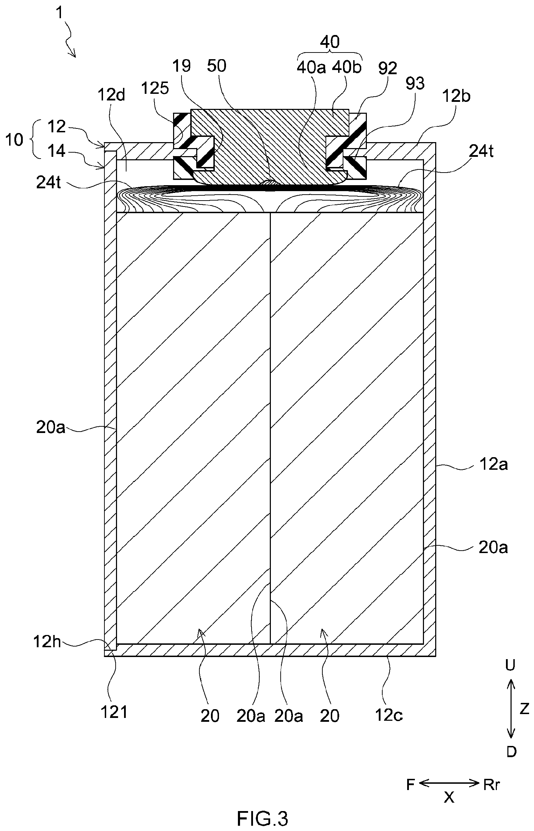

FIG. 1 is a perspective view that schematically shows an electric storage device 1 in accordance with one embodiment. FIG. 2 is a longitudinal cross section view that is schematically shown along a II-II line of FIG. 1. FIG. 3 is a longitudinal cross section view that is schematically shown along a III-III line of FIG. 1. In FIG. 3, for convenience sake of explanation, the number of negative electrode tabs 24t is represented as 11, but the herein present disclosure is not restricted to this. Incidentally, in an explanation described below, reference signs L, R, F, Rr, U, and D in the figures respectively represent left, right, front, rear, up, and down (in a gravity direction). Additionally, in the figures, a reference sign X represents a short side direction (referred to as a thickness direction, too) of the electric storage device 1, a reference sign Y represents a long side direction of the electric storage device 1, and a reference sign Z represents a vertically direction (referred to as a height direction, too). However, these are merely directions for convenience sake of explanation, which never restricts the disposed form of the electric storage device 1.

As shown in FIG. 1 and FIG. 2, the electric storage device 1 includes a case 10, an electrode body 20, a positive electrode terminal 30, and a negative electrode terminal 40. As the illustration is omitted, the electric storage device 1 herein further includes an electrolytic solution. It is preferable that the electric storage device 1 is a nonaqueous electrolyte secondary battery, such as lithium ion secondary battery.

The case 10 is, for example, a member formed in a hexahedron shape and configured to accommodate the electrode body 20. As shown in FIG. 1 and FIG. 2, the case 10 includes an exterior package 12 and a sealing plate 14. The case 10 is typically made of a metal, such as aluminum, aluminum alloy, and stainless steel.

The exterior package 12 is, for example, a main body of the case 10 which is configured to accommodate the electrode body 20 at the inside. As shown in FIG. 1 and FIG. 2, the exterior package 12 includes an opening 12h, a first surface 12a, a pair of opposed second surfaces 12b, 12c, and a pair of opposed third surfaces 12d, 12e. In this embodiment, the first surface 12a is formed in a wide width rectangular shape, and is opposed to the opening 12h. In addition, a pair of second surfaces 12b, 12c respectively extend from a pair of opposed long sides of the first surface 12a. As shown in FIG. 1 and FIG. 2, the second surface 12c, which is positioned at a lower side, configures a bottom surface of the electric storage device 1. In addition, the second surface 12b, which is positioned at an upper side, is an upper surface opposed to this bottom surface, and herein is an attaching surface with the positive electrode terminal 30 and the negative electrode terminal 40. In addition, a pair of third surfaces 12d, 12e respectively extend from a pair of opposed short sides of the first surface 12a. Incidentally, in the present specification, the term "rectangular shape" semantically covers a shape in which the long side formed in a straight line shape and a short side formed in a straight line shape are joined to each other via a curved line, a shape in which at least one of the long side and the short side is formed in a not-straight line shape but is bent, concaved and convexed, or curved so as to be configured with plural straight lines or with curved lines, and the like.

The opening 12h is a portion, for example, on which the sealing plate 14 is attached. Here, the opening 12h is surrounded by upper ends of the pair of second surfaces 12b, 12c and upper ends of the pair of third surfaces 12d, 12e, so as to be formed in a wide width rectangular shape. As shown in FIG. 3, the opening 12h is provided with a recessed step 121 along an inner end. Here, the sealing plate 14 is fit into the step 121. In addition, by welding the sealing plate 14 to the step 121 of the exterior package 12, the exterior package 12 and the sealing plate 14 are integrated so as to make the case 10 be sealed airtightly.

As shown in FIG. 2, the second surface 12b is provided with an exhaust valve 123, a liquid injection hole 16, a first terminal attaching part 124, and a second terminal attaching part 125. The exhaust valve 123 is, for example, a thin-walled part. Here, the exhaust valve 123 is configured to be broken when a pressure inside the case 10 becomes equal to or more than a predetermined value, so as to exhaust a gas inside the case 10 toward an outside. The liquid injection hole 16 is a penetration hole for performing a liquid injection of the electrolytic solution to the inside of the case 10 after the sealing plate 14 is assembled to the exterior package 12. The liquid injection hole 16 here is sealed by a sealing member 16a after the liquid injection of the electrolytic solution. The first terminal attaching part 124 is, for example, a portion to which the positive electrode terminal 30 is attached. On a form shown in FIG. 2, the first terminal attaching part 124 is a step recessed from the second surface 12b. On a bottom of the first terminal attaching part 124, a penetration hole 18 is provided into which the positive electrode terminal 30 is inserted. The second terminal attaching part 125 is, for example, a portion to which the negative electrode terminal 40 is attached. On the form shown in FIG. 2, the second terminal attaching part 125 is a step recessed from the second surface 12b. On a bottom of the second terminal attaching part 125, a penetration hole 19 is provided into which the negative electrode terminal 40 is inserted.

The sealing plate 14 is, for example, a member formed in a flat plate shape and is configured to seal the opening 12h. Thus, it is good that a shape of the sealing plate 14 is a shape according to a shape of the opening 12h. In this embodiment, the sealing plate 14 is formed in a wide width rectangular shape. Here, when the sealing plate 14 is attached to the opening 12h, the sealing plate 14 is opposed to the first surface 12a.

As the electrolytic solution, it is possible to use conventionally known one without particular restriction. As one example, a nonaqueous electrolytic solution is preferably used in which a supporting salt (electrolyte salt) is dissolved into a nonaqueous type solvent (organic solvent). As one example of the nonaqueous type solvent, it is possible to use a carbonate type solvent, such as ethylene carbonate, dimethyl carbonate, and ethyl methyl carbonate. As one example of the supporting salt, it is possible to use a fluorine-containing lithium salt, such as LiPF₆. The electrolytic solution may contain an additive agent as needed.

The positive electrode terminal 30 is a member electrically connected to a positive electrode 22 of the electrode body 20. As shown in FIG. 2, the positive electrode terminal 30 is inserted into the penetration hole 18 so as to be exposed to an outer side of the exterior package 12. Here, the positive electrode terminal 30 includes a shaft part 30a and a base part 30b. The shaft part 30a is, for example, formed in a cylindrical shape and is a portion inserted into the penetration hole 18. The base part 30b is, for example, formed in a flat plate shape, and is a portion arranged along an outer side surface (the second surface 12b) of the exterior package 12. As shown in FIG. 2, the positive electrode terminal 30 herein is caulked by a caulking process to a circumferential edge portion surrounding the penetration hole 18 of the exterior package 12, and a caulking part is formed inside the exterior package 12 at an end part of the shaft part 30a. It is preferable that the positive electrode terminal 30 is made of metal, and it is further preferable that the positive electrode terminal is made of, for example, aluminum or aluminum alloy. Incidentally, the positive electrode terminal 30 is an example for the herein disclosed "terminal".

The negative electrode terminal 40 is a member electrically connected to a negative electrode 24 of the electrode body 20. As shown in FIG. 2, the negative electrode terminal 40 is inserted into the penetration hole 19 so as to be exposed to the outer side of the exterior package 12. Here, the negative electrode terminal 40 includes a shaft part 40a and a base part 40b. The shaft part 40a is, for example, formed in a cylindrical shape and is a portion inserted into the penetration hole 19. The base part 40b is, for example, formed in a flat plate shape, and is a portion arranged along the outer side surface (the second surface 12b) of the exterior package 12. As shown in FIG. 2, the negative electrode terminal 40 herein is caulked by the caulking process to a circumferential edge portion surrounding the penetration hole 19 of the exterior package 12, and a caulking part is formed inside the exterior package 12 at an end part of the shaft part 40a. It is preferable that the negative electrode terminal 40 is made of metal, and it is more preferable that the negative electrode terminal is made of, for example, copper or copper alloy. Incidentally, the negative electrode terminal 40 is an example for the herein disclosed "terminal".

Each of the positive electrode terminal 30 and the negative electrode terminal 40 is insulated from the exterior package 12 by a gasket 92 and an inside insulating member 93. The gasket 92 herein has a function of establishing an insulation of the exterior package 12 from the positive electrode terminal 30 and the negative electrode terminal 40, and additionally sealing (closing) the penetration holes 18, 19. It is good for the gasket 92 or the inside insulating member 93 to use a material superior to a chemical resistant property or a weather resistant property. The gasket 92 and the inside insulating member 93 may be configured with a resin material having an electrically insulating property and being able to be elastically deformed, for example, a fluorinated resin, such as perfluoroalkoxy fluorine resin (PFA), a polyphenylene sulfide resin (PPS), an aliphatic polyamide, or the like. The gasket 92 and the inside insulating member 93 may be, for example, integrated by insertion molding.

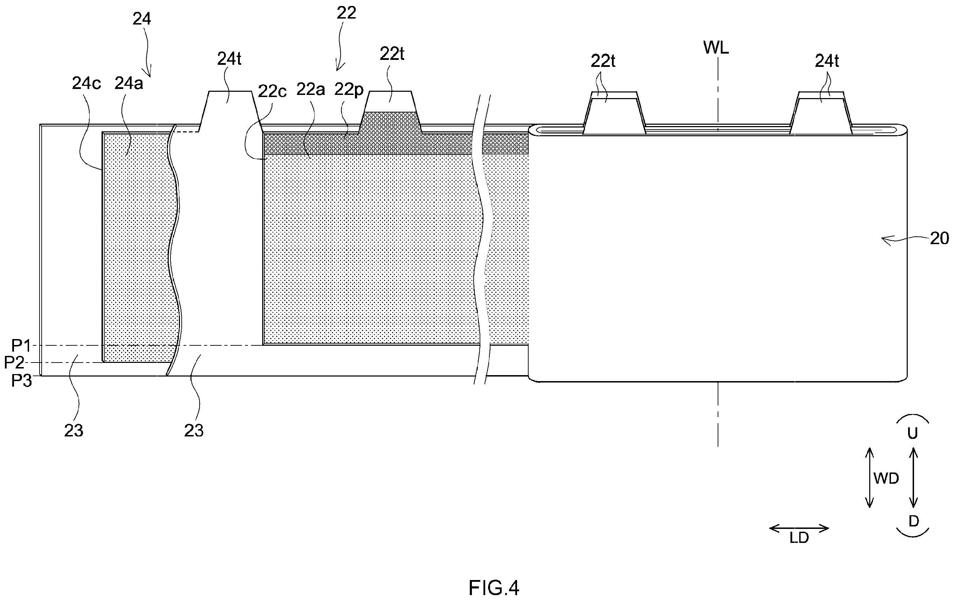

The electrode body 20 is, for example, a power generating element of the electric storage device 1 that includes the positive electrode 22 and the negative electrode 24. FIG. 4 is a schematic view of the electrode body 20 in accordance with one embodiment. As shown in FIG. 4, the electrode body 20 is a wound electrode body in which the positive electrode 22 formed in a long sheet shape and the negative electrode 24 formed in a long sheet shape are wound in a sheet longitudinal direction LD via the separator 23. The electrode body 20 can be manufactured, for example, by winding the positive electrode 22, the negative electrode 24, and the separator 23 to be a cylindrical body and then to perform press molding on the cylindrical body. Thus, the electrode body 20 is formed in a flat shape, and has a pair of wide width surfaces 20a (see FIG. 2 and FIG. 3). A number of the electrode bodies 20 arranged inside one exterior package 12, which is not particularly restricted, may be equal to or more than two (plural), or may be one. As shown in FIG. 3, herein, two electrode bodies are arranged inside the outer package 12.

As shown in FIG. 2 and FIG. 3, the electrode body 20 is accommodated in the exterior package 12 to make the winding axis direction WD and a vertical direction (an up and down direction) of the electric storage device 1 be approximately parallel. In this embodiment, the winding axis WL of the electrode body 20 is approximately parallel to the first surface 12a, the third surfaces 12d, 12e, and the sealing plate 14, and is approximately perpendicular to the second surfaces 12b, 12c. In addition, the wide width surface 20a of the electrode body 20 is opposed to the first surface 12a and the sealing plate 14. In addition, one of end surfaces of the electrode body 20 is opposed to the second surface 12b and the other one of the end surfaces is opposed to the second surface 12c. The end surface of the electrode body 20 is a laminate surface of the positive electrode 22, the negative electrode 24, and the separator 23, and is a open surface. Incidentally, the electrode body 20 may be accommodated inside the case 10 under a state of being covered by an electrode body holder, which is not shown in figures and is configured with a resin sheet having an insulating property.

As shown in FIG. 4, the positive electrode 22 includes a positive electrode collecting foil 22c (for example, an aluminum foil) formed in a long strip-like shape and a positive electrode active material layer 22a fixed on at least one surface of the positive electrode collecting foil 22c. Although not particularly restricting, one of side edge parts of the positive electrode 22 in the winding axis direction WD may be, as needed, provided with a protective layer 22p. Incidentally, as a configuration material of the positive electrode active material layer 22a and a configuration material of the protective layer 22p, it is possible without particular restriction to use those utilized for this kind of electric storage device (a lithium ion secondary battery in this embodiment).

One of end parts (a top end part of FIG. 4) of the positive electrode collecting foil 22c in the winding axis direction WD is provided with plural positive electrode tabs 22t. The plural positive electrode tabs 22t protrude toward said one of end parts (the top end part of FIG. 4) in the winding axis direction WD. The plural positive electrode tabs 22t are provided along the longitudinal direction LD of the positive electrode 22 at the intervals (intermittently). The positive electrode tab 22t is a part of the positive electrode collecting foil 22c and is a portion of the positive electrode collecting foil 22c where the positive electrode active material layer 22a is not formed (an active material layer unformed part). In the embodiment shown by FIG. 4, a protective layer 22p is provided at a base end side of the positive electrode tab 22t. In this embodiment, plural positive electrode tabs 22t protrude in the winding axis direction WD more than the separator 23. A shape and a size of the positive electrode tab 22t can be suitably adjusted, for example, in consideration of a state where it is connected to the positive electrode terminal 30, based on a formed position of it, or the like. Plural positive electrode tabs 22t are laminated at one of the end parts (the top end part of FIG. 4) in the winding axis direction WD, so as to configure a positive electrode tab group. Thus, a height (a length in the winding axis direction WD) of each positive electrode tab 22t and a width (a length in the longitudinal direction LD) of each positive electrode tab 22t may not be the same. The positive electrode tab 22t is an example of the "tab" disclosed herein.

As shown in FIG. 4, the negative electrode 24 includes a negative electrode collecting foil 24c (for example, a copper foil) formed in a long strip-like shape, and a negative electrode active material layer 24a fixed on at least one surface of the negative electrode collecting foil 24c. Incidentally, as a configuration material of the negative electrode active material layer 24a, it is possible without particular restriction to use one utilized for this kind of electric storage device (the lithium ion secondary battery in this embodiment).

At one of the end parts (the top end part of FIG. 4) of the negative electrode collecting foil 24c in the winding axis direction WD, plural negative electrode tabs 24t are provided. The plural negative electrode tabs 24t protrude to one of the end parts (the top end part of FIG. 4) in the winding axis direction WD. The plural negative electrode tabs 24t are provided along the longitudinal direction LD of the negative electrode 24 at the intervals (intermittently). The negative electrode tab 24t is a part of the negative electrode collecting foil 24c, and is a portion of the negative electrode collecting foil 24c where the negative electrode active material layer 24a is not formed (an active material layer unformed part). In this embodiment, the plural negative electrode tabs 24t protrude in the winding axis direction WD more than the separator 23. A shape and a size of the negative electrode tab 24t can be suitably adjusted, for example, in consideration of a state where it is connected to the negative electrode terminal 40, based on a formed position of it, or the like. For example, the plural negative electrode tabs 24t are laminated at one of the end parts (the top end part of FIG. 4) in the winding axis direction WD, so as to configure a negative electrode tab group. Thus, a height (a length in the winding axis direction WD) of each negative electrode tab 24t and a width (a length in the longitudinal direction LD) of each negative electrode tab 24t may not be the same. The positive electrode tab 22t is an example of the herein disclosed "tab".

The separator 23 is a member establishing an insulation between the positive electrode active material layer 22a of the positive electrode 22 and the negative electrode active material layer 24a of the negative electrode 24. The separator 23 in this embodiment configures an outer surface of the electrode body 20. As the separator 23, it is possible to use, for example, a porous sheet made of resin consisting of polyolefin resin, such as polyethylene (PE) and polypropylene (PP).

As shown in FIG. 4, regarding the electrode body 20, a lower end P3 of the separator 23 is positioned at the lowest side, then a lower end P2 of the negative electrode 24 is positioned, and a lower end P1 of the positive electrode 22 is positioned at the uppermost side. Regarding widths of respective sheets (a length in the winding axis direction WD of FIG. 4, however, excluding the positive electrode tab 22t and the negative electrode tab 24t), they are larger in an order of the separator 23, the negative electrode 24, and the positive electrode 22.

In the herein disclosed electric storage device 1, the electrode body 20 includes the wide width surface 20a opposed to the sealing plate 14 and the first surface 12a. Further, it is arranged inside the case 10 to make the positive electrode tab 22t and the negative electrode tab 24t be opposed to the second surface 12b on which the positive electrode terminal 30 and the negative electrode terminal 40 are attached. Then, the positive electrode tab 22t is joined to the positive electrode terminal 30 (specifically, the shaft part 30a) by a metal joint 50. Similarly, the negative electrode tab 24t is joined to the negative electrode terminal 40 (specifically, the shaft part 40a) by the metal joint 50. The metal joint 50 is, for example, a portion where a tab and a terminal (here, the positive electrode tab 22t and positive electrode terminal 30, and the negative electrode tab 24t and negative electrode terminal 40) are melted and solidified so as to be joined mutually.

The exterior package 12 used in the herein disclosed electric storage device 1 includes an opening 12h formed in a wide-width rectangular shape. Thus, not only the positive electrode tab 22t and the positive electrode terminal 30, but also the negative electrode tab 24t and the negative electrode terminal 40 can be electrically connected, without the electrical collector body, by the metal joint 50. In other words, the electrode body 20 and the positive electrode terminal 30, and it and the negative electrode terminal 40 are directly and electrically connected. Accordingly, it is possible to suppress an increase in the electric resistance of the electric storage device 1. The metal joint 50 can be, for example, suitably formed by laser welding, ultrasonic joining, resistance welding, or the like.

The exterior package 12 includes the opening 12h formed in the wide-width rectangular shape, ant thus it is possible to easily accommodate the electrode body 20 inside the exterior package 12. Accordingly, in comparison to the electric storage device in which the conventional case is used (see Patent Document 1), it is possible to make a clearance, required for accommodating the electrode body 20, be smaller. By doing this, it is possible to further make a volume of the electrode body 20 be larger. In addition, by increasing the volume of the electrode body 20, a movable range of the electrode body 20 in the case 10 is reduced. By doing this, it is possible to suitably reduce breakage risks of the positive electrode tab 22t and the negative electrode tab 24t. Accordingly, it is possible to compatibly implement an enhancement of the capacity (a high volume energy density) and a conduction reliability of the electric storage device 1.

In some preferable aspects, as shown in FIG. 3, plural electrode bodies 20 are arranged inside the case 10 (the exterior package 12), and the metal joint 50 is formed by joining the positive electrode tabs 22t and the negative electrode tabs 24t of plural electrode bodies 20, and the positive electrode terminal 30 and the negative electrode terminal 40. According to a configuration described above, it is possible to implement providing the electric storage device 1 whose capacity is further suitably enhanced. Incidentally, the electric storage device 1 of the present embodiment includes two electrode bodies 20, to which the herein present disclosure is not restricted, and may include three or more electrode bodies 20.

In some preferable aspects, inside the case 10, the sealing plate 14 and a surface opposed to the sealing plate 14 within the wide-width surface 20a of the electrode body 20 (the wide width surface 20a of the electrode body 20 opposed to the sealing plate 14, when plural electrode bodies 20 are accommodated in the case 10) are abutted. In other words, it is configured to make the wide width surface 20a of the electrode body 20 be pushed by the sealing plate 14, when the electrode body 20 is accommodated and the sealing plate 14 and the exterior package 12 are welded. According to the configuration described above, a movement of the electrode body 20 inside the case 10 is regulated even in a situation where a vibration, an impact, or the like are applied at the time when the electric storage device 1 is used. By doing this, it is possible to further suitably reduce the damage risks of the positive electrode tab 22t and the negative electrode tab 24t. Accordingly, it is possible to provide the electric storage device 1 whose conduction reliability is further enhanced. Incidentally, when the electric storage device 1 is formed in the aspect described above, it is preferable that, for example, among the wide width surface 20a of the electrode body 20, approximately 70% or more is abutted on the sealing plate 14, or approximately 80% or more is abutted on the sealing plate 14.

### <Manufacturing method of electric storage device 1>

The electric storage device 1 can be manufactured by preparing the case 10 as described above (the exterior package 12 and the sealing plate 14), the electrode body 20 (one or plural, herein two), the electrolytic solution, the positive electrode terminal 30, and the negative electrode terminal 40, and by using a manufacturing method, for example, which includes a terminal assembling step, an electrode body accommodating step, a metal joint forming step, a sealing-plate sealing step, and a liquid injection step, typically in this order. The manufacturing method of the electric storage device 1 is characterized by using the case 10 and the electrode body 20 which are as described above, and then by performing the electrode body accommodating step, the metal joint forming step, and the sealing step. The other manufacture processes may be similar to conventional manufacture processes. In addition, the herein disclosed manufacturing method may further include a different step at an arbitrary stage.

### (Terminal assembling step)

At the terminal assembling step, the positive electrode terminal 30, the negative electrode terminal 40, the gasket 92, and the inside insulating member 93 are assembled on the second surface 12b of the exterior package 12. The negative electrode terminal 40 can be fixed on the second surface 12b of the exterior package 12, for example, by a caulking process (riveting). The caulking process is performed, while the gasket 92 is sandwiched between the negative electrode terminal 40 and the second surface 12b of the exterior package 12 and further the insulating member 80 is sandwiched between the second surface 12b of the exterior package 12 and the shaft part 40a of the negative electrode terminal 40 (see FIG. 8). By doing this, an end part of the shaft part 40a of the negative electrode terminal 40 is caulked. By the caulking process as described above, the gasket 92 and the inside insulating member 93 are compressed, the negative electrode terminal 40, the second surface 12b of the exterior package 12, and the inside insulating member 93 are integrally fixed on the second surface 12b of the exterior package 12, and additionally the penetration hole 19 is sealed. Incidentally, an assembling method for the positive electrode terminal 30 side may be similar to the assembling method for the negative electrode terminal 40 side described above. In addition, the terminal assembling step is not restricted to this, and thus, for example, the second surface 12b of the exterior package 12, the positive electrode terminal 30, and the negative electrode terminal 40, and the gasket 92 and the inside insulating member 93 may be integrated by an insertion molding.

### (Electrode body accommodating step)

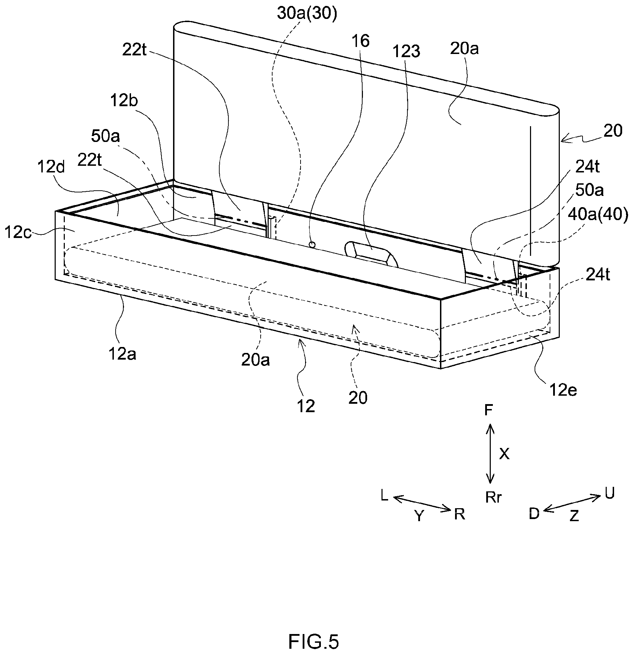

At the electrode body accommodating step, the electrode body 20 is accommodated in the exterior package 12. FIG. 5 is a schematic view that is to explain the electrode body accommodating step and the tab joining step in accordance with one embodiment. In FIG. 5, a join planned part 50a (a formation planned part of the metal joint 50) is represented by an imaginary line. At that time, the electrode body 20 is arranged to make one of the wide width surfaces 20a of the electrode body 20 be opposed to the first surface 12a and to make the positive electrode tab 22t and the negative electrode tab 24t be opposed to the second surface 12b to which the positive electrode terminal 30 and the negative electrode terminal 40 are attached. Here, the positive electrode tab 22t is bent and is arranged to be opposed to the shaft part 30a of the positive electrode terminal 30. Similarly, the negative electrode tab 24t is bent and is arranged to be opposed to the shaft part 40a of the negative electrode terminal 40. Incidentally, in a situation where the electric storage device 1 including plural electrode bodies 20 is manufactured, it is possible to perform the electrode body accommodating step divided by plural times, while sandwiching the tab joining step. In the present embodiment, as shown in FIG. 5, the electrode body accommodating step is firstly performed for one electrode body 20 among two electrode bodies 20. Then, after the tab joining step, the electrode body accommodating step is performed for the remaining one of the electrode bodies 20.

### (Tab joining step)

At the tab joining step, the plural positive electrode tabs 22t and the positive electrode terminal 30, and the plural negative electrode tabs 24t and the negative electrode terminal 40 are electrically joined. Here, a joining method by laser welding is explained as an example, but the herein present disclosure is not restricted to this, and thus, for example, the above described joining method may be used. At first, as shown in FIG. 5, arrangement is performed to make the negative electrode tab 24t of the electrode body 20 be stacked on the shaft part 40a of the negative electrode terminal 40. At that time, the negative electrode tab 24t may be folded and bent in order to make the shaft part 40a of the negative electrode terminal 40 be easily stacked. In a situation where the electric storage device 1 includes the plural electrode bodies 20, as shown in FIG. 3 and FIG. 5, the negative electrode tab 24t of the other electrode body 20 may be further stacked on the negative electrode tab 24t of one electrode body 20. Then, in a state where the negative electrode tab 24t is stacked on the shaft part 40a of the negative electrode terminal 40, a laser is used to scan on the join planned part 50a. By doing this, the metal joint 50 is formed, and the negative electrode terminal 40 and the negative electrode tab 24t are electrically connected. Incidentally, a joining method for the positive electrode tab 22t and the positive electrode terminal 30 may be similar to the above described joining method for the negative electrode tab 24t and the negative electrode terminal 40. Additionally, in FIG. 5, the third surface 12e of the exterior package 12 is positioned at the lower side for convenience sake of explanation, but the herein present disclosure is not restricted to this. At the tab joining step, based on the joining method or a jig used for joining, it is possible to perform the tab joining step in a state where the exterior package 12 is tilted by an angle at which it is easy to form the metal joint 50.

### (Sealing-plate sealing step)

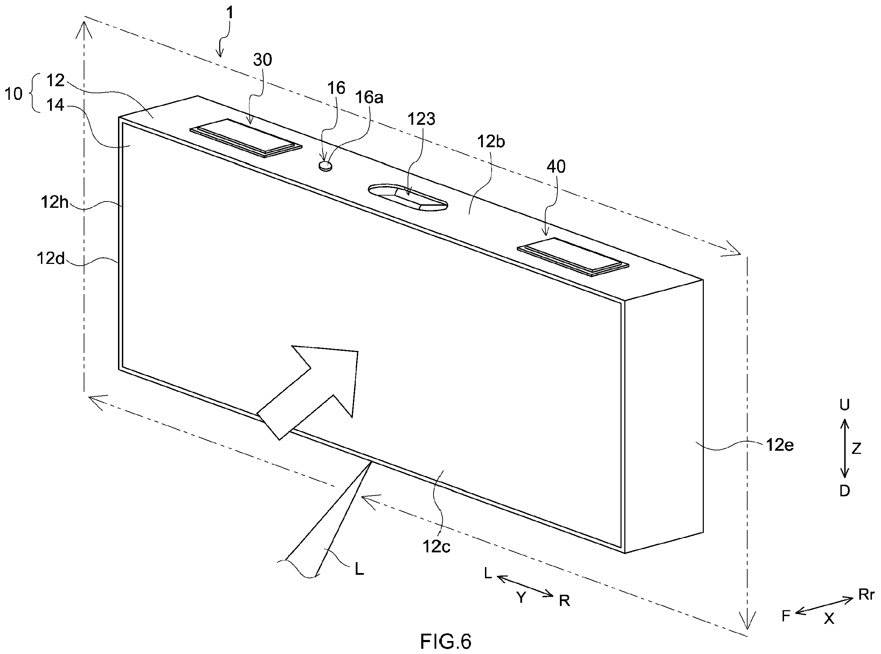

At the sealing-plate sealing step, the opening 12h of the exterior package 12 and the sealing plate 14 are used for sealing. FIG. 6 is a schematic view that is to explain the sealing-plate sealing step in accordance with one practical example. In FIG. 6, for convenience sake of explanation, a press direction of the sealing plate 14 is represented by a white arrow and a scanning path of a laser L is represented by an imaginary line. As shown in FIG. 6, the sealing plate 14, in which to the opening 12h of the exterior package 12 the sealing plate 14 is fit, is pushed into a first surface 12a direction (a white arrow direction of FIG. 6) of the exterior package 12. Then, while a state is held that the sealing plate 14 is pushed into the first surface 12a direction of the exterior package 12, the sealing plate 14 and the exterior package 12 are sealed. Thus, in a state where the wide width surface 20a opposed to the sealing plate 14 of the electrode body 20 at the closest position to the sealing plate 14 is abutted, the opening 12h of the exterior package 12 is sealed with the sealing plate 14. Accordingly, it is possible to further suitably reduce damage risks of the positive electrode tab 22t and the negative electrode tab 24t. Here, along a circumferential edge of the sealing plate 14 (in the imaginary line direction of FIG. 6), the laser L is allowed to scan. However, the sealing method is not restricted to this.

At the sealing-plate sealing step, a press strength of the sealing plate 14 is not particularly restricted, can be changed suitably based on a material, a thickness, or a size of the case 10.For example, the press strength of the sealing plate 14 may be equal to or more than 10 kN.

### (Liquid injection step)

At the liquid injection step, the electrolytic solution is injected to the inside of the case 10 from the liquid injection hole 16. Then, the liquid injection hole 16 is covered by the sealing member 16a so as to hermetically seal the case 10. Thus, it is possible to manufacture the electric storage device 1.

Although the electric storage device 1 can be used for various purposes, it can be suitably used for a purpose in which increasing a capacity of the electric storage device 1 is required, or a purpose in which an external force, such as vibration and impact, may be applied at the use time, typically as a power source (power supply for driving) for a motor mounted on various vehicles, for example, a passenger car, a truck, or the like. The kind of the vehicle is not particularly restricted, but it is possible to use it, for example, on a plug-in hybrid electric vehicle (PHEV), a hybrid electric vehicle (HEV), a battery electric vehicle (BEV), or the like.

Above, some embodiments in accordance with the herein present disclosure are explained, but the above described embodiments are merely examples. The herein present disclosure can be implemented in other several forms. The herein present disclosure can be executed based on the contents disclosed in the present specification, and the technical common sense in the present field. The technique recited in the appended claims includes variously deformed or changed versions of the embodiments that have been illustrated above. For example, one part of the above described embodiment can be replaced with another deformed aspect, and furthermore another deformed aspect can be added to the above described embodiment. In addition, unless a technical feature is explained to be essential, this technical feature can be appropriately deleted.

While described above, as a particular aspect of the herein present disclosure, it is possible to use each item described below.

Item 1: An electric storage device, comprising:
an electrode body in which a long sheet-shaped positive electrode and a long sheet-shaped negative electrode are wound in a sheet longitudinal direction via a separator and which comprises a pair of opposed wide width surfaces;
a case which is formed in a hexahedron shape, which is configured to accommodate the electrode body, and which comprises:
   an exterior package comprising a first surface formed in a wide width rectangular shape, an opening opposed to the first surface, a pair of opposed second surfaces extending from an outer edge of the first surface to the opening, and a pair of opposed third surfaces extending from the outer edge of the first surface to the opening; and
   a sealing plate configured to seal the opening, opposed to the first surface, and formed in a wide width rectangular shape; and terminals electrically connected to the electrode body, wherein
each of the positive electrode and the negative electrode comprises plural tabs protruding at one of end parts in a winding axis direction of the electrode body,
penetration holes are provided on one of the second surfaces,
the terminals are inserted into the penetration holes,
the electrode body is arranged inside the case, wherein the wide width surfaces respectively face the sealing plate and the first surface, and the tabs face the second surfaces to which the terminals are attached, and
a metal joint is provided to connect the terminals and the tabs.

Item 2: The electric storage device recited in item 1, wherein
plural electrode bodies are arranged inside the case, and
the metal joint is formed by joining the tabs of the plural electrode bodies and the terminals.

Item 3: The electric storage device recited in item 1 or 2, wherein
it is configured that the wide width surface of the electrode body is pushed by the sealing plate when the sealing plate and the exterior package are welded.

## Claims

1. An electric storage device (1), comprising:
an electrode body (20) in which a long sheet-shaped positive electrode (22) and a long sheet-shaped negative electrode (24) are wound in a sheet longitudinal direction via a separator (23) and which comprises a pair of opposed wide width surfaces (20a);
a case (10) which is formed in a hexahedron shape, which is configured to accommodate the electrode body (20), and which comprises:
an exterior package (12) comprising a first surface (12a) formed in a wide width rectangular shape, an opening (12h) opposed to the first surface (12a), a pair of opposed second surfaces (12b, 12c) extending from an outer edge of the first surface (12a) to the opening (12h), and a pair of opposed third surfaces (12d, 12e) extending from the outer edge of the first surface (12a) to the opening (12h); and
a sealing plate (14) configured to seal the opening (12h), opposed to the first surface (12a), and formed in a wide width rectangular shape; and terminals (30, 40) electrically connected to the electrode body (20), wherein
each of the positive electrode (22) and the negative electrode (24) comprises plural tabs (22t, 24t) protruding at one of end parts in a winding axis direction of the electrode body (20),
penetration holes (18, 19) are provided on one of the second surfaces (12b, 12c),
the terminals (30, 40) are inserted into the penetration holes (18, 19),
the electrode body (20) is arranged inside the case (10), wherein the wide width surfaces (20a) respectively face the sealing plate (14) and the first surface (12a), and the tabs (22t, 24t) face the second surfaces (12b, 12c) to which the terminals (30, 40) are attached, and
a metal joint (50) is provided to connect the terminals (30, 40) and the tabs (22t, 24t).

2. The electric storage device (1) according to claim 1, wherein
plural electrode bodies (20) are arranged inside the case (10), and
the metal joint (50) is formed by joining the tabs (22t, 24t) of the plural electrode bodies (20) and the terminals (30, 40).

3. The electric storage device (1) according to claim 1 or 2, wherein
it is configured that the wide width surface (20a) of the electrode body (20) is pushed by the sealing plate (14) when the sealing plate (14) and the exterior package (12) are welded.
